(19) Europäisches Patentamt
European Patent Office
Office européen des brevets

(11) **EP 3 450 989 A2**

(12) **EUROPEAN PATENT APPLICATION**
published in accordance with Art. 153(4) EPC

(43) Date of publication:
**06.03.2019 Bulletin 2019/10**

(51) Int Cl.:
**G01P 3/62** (2006.01)          **G01P 5/14** (2006.01)
**G01P 5/175** (2006.01)         **G05D 1/08** (2006.01)

(21) Application number: **18744734.7**

(22) Date of filing: **23.01.2018**

(86) International application number:
**PCT/AZ2018/000005**

(87) International publication number:
**WO 2018/137004 (02.08.2018 Gazette 2018/31)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(30) Priority: **30.01.2017   AZ 20170019**

(71) Applicant: **National Aviation Academy**
**1045 Baku (AZ)**

(72) Inventors:
• **PASHAYEV, Arif MirJalal**
  **Baku 1045 (AZ)**

• **HAZARKHANOV, Anvar Tapdig**
  **Sumgait 5000 (AZ)**
• **KARIMLI, Toghrul Isa**
  **Baku 1104 (AZ)**
• **NEYMATOV, Vasif Aydin**
  **Siyazan 5300 (AZ)**
• **KARIMLI, Vasif Isa**
  **Baku 1104 (AZ)**

(74) Representative: **Jeck, Anton**
**Jeck & Fleck**
**Patentanwälte**
**Klingengasse 2**
**71665 Vaihingen/Enz (DE)**

(54) **AEROMETRIC METHOD AND DEVICE (SYSTEM) FOR MEASURING AIRCRAFT SPATIAL POSITION, YAW AND LATERAL VELOCITY**

(57)     The proposed invention (method and device) is related to the measurement technology and is intended for measuring spatial position (roll and pitch), yawing and lateral speed of the aircraft. The objective of the invention is to expand the functionality and technical capabilities of aerometric method and device. For this purpose, in order to measure the additionally specified parameters by the air pressure probes installed in the left and right nose sections of the fuselage and additional air pressure probes installed in the left and right tail sections of the fuselage, as well as at both wingtips of the aircraft, useful data are generated as a result of the following: variation in aircraft roll angle, based on the difference in static air pressure values between left and right static air pressure probes additionally located at the wingtips of the aircraft; variation in aircraft pitch angle, based on the difference in static air pressure values between the air pressure probes located in the nose section and additional air pressure probes located in the tail section of the aircraft; during yawing and in the presence of the lateral speed of the aircraft, based on the difference in lateral static air pressure values between the additionally installed air pressure probes located in the nose and tail sections of the fuselage.

This is achieved by the fact that the left-sided air pressure probes located in the front section of the fuselage, and those additionally installed in the tail section of the fuselage and at the left wingtip, are additionally provided with the horizontally located lateral openings for sensing left-sided lateral static air pressure; the right-sided air pressure probes located in the front section of the fuselage, and those additionally installed in the tail section of the fuselage and at the right wingtip, are additionally provided with the horizontally located lateral openings for sensing right-sided lateral static air pressure; and the air pressure probes additionally installed at the wingtips and in the tail section of the fuselage are provided by the vertically located openings for sensing static air pressure. When the roll angle of the aircraft changes, the vertical spatial movement of the static air pressure probes additionally installed at the wingtips causes the appearance of a difference in static pressure between such probes due to the difference in altitude of their relative positions. When the pitch angle of the aircraft changes, the vertical movement of the static air pressure probes additionally installed on the opposite sides of the fuselage causes the appearance of a difference of static air pressure between such probes due to the difference

**(Cont. next page)**

in altitude of their relative positions. In the process of yawing of the aircraft, the lateral static air pressure increases at the additionally installed lateral static air pressure probes located on the opposite sides of the fuselage in the direction of the yaw turn, and decreases at the probes located against the direction of the yaw turn. Under the wind effect, if the aircraft experiences a leftward or rightward lateral speed (in the absence of yawing), the lateral static air pressure increases at the additionally installed lateral static air pressure probes located in the wind plane, and decreases on the opposite sides.

Fig. 1.

**Description**

The proposed invention (method and device) relates to the measurement equipment and is intended for measuring spatial position (roll and pitch), yawing and lateral speed, and can be used in the instruments for measuring longitudinal and vertical speeds, flight path, flight and navigation parameters, and in aircraft control configurations.

The process of measuring air-data and navigation parameters using aerometric methods becomes especially important when performing intercontinental flights. In order to improve the reliability and credibility of the obtained information pertaining to the flight parameter values, and to increase the efficiency of determining systematic errors of the measurements, it is feasible to use several duplicating each other sources of different types (main and standby), whose sensors function based on different physical principles of measurement. For example, if the aircraft flies where there is no contact with the navigation satellites, or ground control system (such situations occur when flying over the oceans, Earth poles, or high and extended mountain ranges), in such situations, the control is performed completely by the aircraft autonomous inertial system, which imposes additional requirements to its operational reliability and information precision.

A *device for measuring the angle of attack and sideslip using aerometric method* is known in the prior art, which characterizes aircraft handling properties [1, 2]. The device is composed of a movable aerodynamic vane, *heater and housing, which contains a conversion circuit for generating an electrical signal corresponding to the value of the angle of attack*. Such electrical signal is formed by converting the angle of mechanical rotation of the wind vane, which depends on the angle of attack of the aircraft, into a corresponding electrical quantity. The aerodynamic vane represents a streamlined symmetrical wing-shaped body, which rotates around its own axis of symmetry according to the direction of the air flow, thus resulting in the formation of an aerodynamically balanced state. The *italicized* features indicate those attributable to the subject of the proposed invention. However, besides the fact that such device can determine just the values of the angle of attack and sideslip, it is also characterized by such disadvantages as reduced sensitivity and increased instrument errors caused by the presence of friction force in the wind vane axis of rotation [1].

The air data systems (ADS) are known in the prior art as they relate to such aircrafts as Airbus A318/319/320/321 [3], A340-500/600 [4], Boeing 747-400 [5], Boeing 767 [6], and Boeing 787 [7], which are provided with the aerometric measurement systems comprising four (three - in Boeing 787) total and six static pressure probes, and two air temperature and angle of attack sensors with two aerodynamic vanes and heaters. The corresponding units and computers perform such operations as calculation, heating of the pressure, temperature and angle of attack sensors, as well as monitoring discrepancies in the air data measurement systems.

The aircraft air data measurement systems generate information containing data about static, dynamic, operating and total pressure, as well as static and total air temperatures, barometric altitude and the rate of change thereof, indicated air speed, calibrated and true air speeds, maximum operating aircraft speed, Mach number and angle of attack. At the same time, such systems are incapable of measuring pitch, rolling and yawing angles, which poses a significant disadvantage of the aerometric method, since there are strict aircraft limitations with respect to the values of such angles.

A device (system) for measuring air data using aerometric method is known in the prior art [8, 9, 10]. The device comprises *air pressure probes with intake openings provided with electrical heating and anti-icing system, connected with pressure sensors via pneumatic lines, external air temperature sensors* and *a flight data computer,* wherein all these units are positioned within one special aerodynamically streamlined housing attached to the aircraft, which can be embodied in the form of a cone, ellipsoid, cylinder or a pyramid. The *italicized* features indicate those attributable to the subject of the proposed invention. In order to expand the operating range of the flight parameter measurement to $-180° \leq \alpha \leq 180°$ (angles of attack) and $-180° \leq \beta \leq 180°$ (angles of sideslip), i.e., within the entire sphere, the system can be provided with multi-finned rods as pressure probes. However, despite numerous advantages of such system, it is also unable of measuring such necessary flight parameters as pitch, roll, yaw and lateral speed of the aircraft [8].

The closest to the proposed method based on the technical substance (prototype method) is the following aerometric method of: *measuring barometric and relative altitude, vertical speed (by measuring static pressure, which changes as a function of flight altitude); indicated speed and Mach number (by measuring dynamic pressure, which changes with the flight speed); air temperature; true air speed (by measuring static and total air pressure); and angle of attack of the aircraft (by measuring differential pressure)* [11]. The *italicized* features indicate those attributable to the subject of the proposed invention. The absence in the process of measurement of such parameters as: variation in static pressure at the wingtips as a function of roll variation; variation in static pressure at the tail section of the fuselage as a function of pitch variation; and variation in lateral static pressure at the tail section of the fuselage as a function of yaw and lateral speed variations, represents disadvantages of this method.

The closest to the proposed device based on the technical substance (prototype device) is the system for measuring air data using aerometric method comprising four *smart air pressure probes (integrated total/static pressure and angle of attack probe), two total air temperature sensors, and a pressure input panel* [11]. The integrated smart computer (total/static pressure and angle of attack probe) includes *total and static pressure probes, a differential pressure probe* (aerodynamic *vane-less measurement of the angle of attack), and an air data computer.* It relates to the *air data*

*system* and is designed to feed information to the flight control system and aircraft stall determination, prevention and avoidance system. The *italicized* features indicate those attributable to the subject of the proposed invention.

The total pressure is obtained from the probe embodied in the form of a truncated cone-shaped tube, the front portion of which is provided with an opening having a center located along the axis of symmetry. The total pressure is equal to the sum of static and dynamic pressure. The static pressure is obtained from the probe embodied in the form of a straight tube having symmetrically located openings in its upper and lower portions. The information concerning the angle of attack is formed based on the measurement of the differential pressure value, wherein the corresponding signal is obtained from two openings symmetrically located on the upper and lower surfaces of the same truncated cone. As a result of the calculations performed by the ADS computer, the following data are generated: corrected values of static, total and dynamic pressure; values of the total and static ambient air temperatures; barometric correction; barometric altitude values, corrected barometric altitude values; current flight altitude variation values; indicated and calibrated, as well as true air speed values; maximum operating speed values; current values of the Mach number and angle of attack.

The latest civil as well as military aircraft models of the fifth generation, such as Airbus A380, A350, A400M, Embraer 170/190, Bombardier Learjet 85, Boeing C-130 AMP, Boeing X-45C, Lockhid Martin F-22, F-35, Northrop Grumman X-47B, and Sikorsky X2, successfully employ such system provided by GOODRICH and UTC Aerospace Systems [12, 13]. Despite numerous advantages, the inability to measure such parameters, as pitch, roll and yaw angles as well as lateral speed using aerometric method represents a disadvantage of the device (system).

The proposed invention helps overcoming disadvantages in the analogs and prototypes.

The objective of the invention is to expand the functionality and technical capabilities of the aerometric method and device (system).

The technical result is achieved by the fact that in order to measure the additionally specified parameters by the air pressure probes installed in the left and right nose sections of the fuselage and additional air pressure probes installed in the left and right tail sections of the fuselage, as well as at both wingtips of the aircraft, useful data are generated as a result of the following: variation in aircraft roll angle, based on the difference in static air pressure values between left and right static air pressure probes additionally located at the wingtips of the aircraft; variation in aircraft pitch angle, based on the difference in static air pressure values between the air pressure probes located in the nose section and additional air pressure probes located in the tail section of the aircraft; during yawing and in the presence of the lateral speed of the aircraft, based on the difference in lateral static air pressure values between the additionally installed air pressure probes located in the nose and tail sections of the fuselage.

This is achieved by the fact that the left-sided air pressure probes located in the front section of the fuselage, and those additionally installed in the tail section of the fuselage and at the left wingtip, are additionally provided with the horizontally located lateral openings for sensing left-sided lateral static air pressure; the right-sided air pressure probes located in the front section of the fuselage, and those additionally installed in the tail section of the fuselage and at the right wingtip, are additionally provided with the horizontally located lateral openings for sensing right-sided lateral static air pressure; and the air pressure probes additionally installed at the wingtips and in the tail section of the fuselage are provided by the vertically located openings for sensing static air pressure. When the roll angle of the aircraft changes, the vertical spatial movement of the static air pressure probes additionally installed at the wingtips causes the appearance of a difference in static pressure between such probes due to the difference in altitude of their relative positions. When the pitch angle of the aircraft changes, the vertical movement of the static air pressure probes additionally installed on the opposite sides of the fuselage causes the appearance of a difference of static air pressure between such probes due to the difference in altitude of their relative positions. In the process of yawing of the aircraft, the lateral static air pressure increases at the additionally installed lateral static air pressure probes located on the opposite sides of the fuselage in the direction of the yaw turn, and decreases at the probes located against the direction of the yaw turn. Under the wind effect, if the aircraft experiences a leftward or rightward lateral speed (in the absence of yawing), the lateral static air pressure increases at the additionally installed lateral static air pressure probes located in the wind plane, and decreases on the opposite sides. If the aircraft experiences both yawing and lateral speed under the wind effect, the difference in variation of the lateral static pressure between the nose and tail sections along one side of the fuselage will determine the lateral speed, while the difference in the lateral static pressure between the nose and tail sections along one side of the fuselage will characterize the yaw angle of the aircraft.

The aerometric method and device (system) for measuring spatial position, yawing and lateral speed of the aircraft offers a number of advantages, such as:

- when performing flights over the oceans, Earth poles, or high and extended mountain ranges in the absence of contact with the navigation satellites or ground-based air navigation system, there is a possibility of additional measurement of pitch, roll and yaw angles as well as lateral speed;
- increased reliability and credibility of information;
- improved flight safety by using additionally obtained data in visual and especially sound systems for alerting and prevention of dangerous spatial aircraft evolutions, which is vital in case of pilot disorientation. Statistics shows that between 5 and 10% of all general flight accidents can be related to spatial disorientation, and 90% of such accidents are fatal [14]. According to the statistics provided in the Guidance for aeronautical information management, 202 flight accidents have been recorded during the period from 1994 to 2003 due to spatial disorientation. Of those, 184 accidents (91%) were fatal [15]. As can be seen, spatial disorientation is associated with high percentage of fatalities. Ensuring safety is of utmost importance in air transportation.

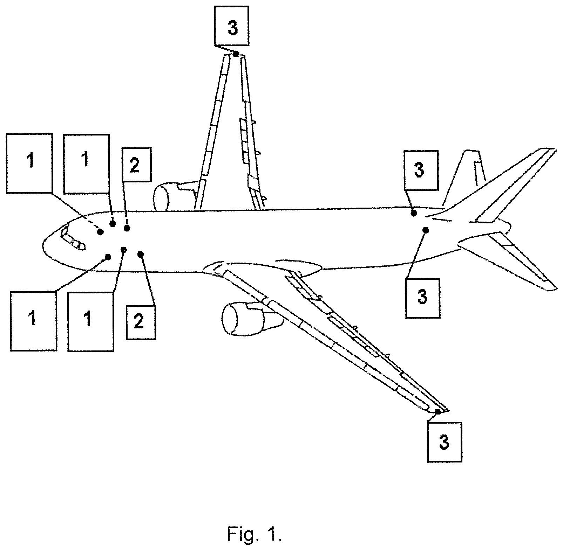

Figure 1    shows a schematic diagram of placing air pressure probes, which allows performing aerometric measurements of such parameters, as pitch, roll, yaw and lateral speed. Located in the front section of the fuselage four smart probes (1) (total, static, differential and lateral static pressure probes), two air temperature sensors (2) (total air temperature), four smart probes (3) (static and lateral static pressure probes), and four air data computers (not shown in the diagram) constitute the basis of the aerometric system.

The air data computer acquires signals from each air pressure probe and air temperature sensor, and along with altitude and speed parameters additionally calculates the pitch, roll and yaw angles as well as lateral speed of the aircraft. The roll angle is generated based on the difference in signals received from the static pressure probes (3) installed at the wingtips of the aircraft; the pitch angle is generated based on the difference in signals received from the static pressure probes installed in the nose (1) and tail (3) sections of the fuselage; the yaw angle is generated based on the difference in signals received from the lateral static pressure probes installed in the nose (1) and tail (3) sections of the fuselage; and the lateral speed of the aircraft is generated based on the variation of the difference in signals received from the lateral static pressure probes installed in the nose (1) and tail (3) sections of the fuselage (fig. 1).

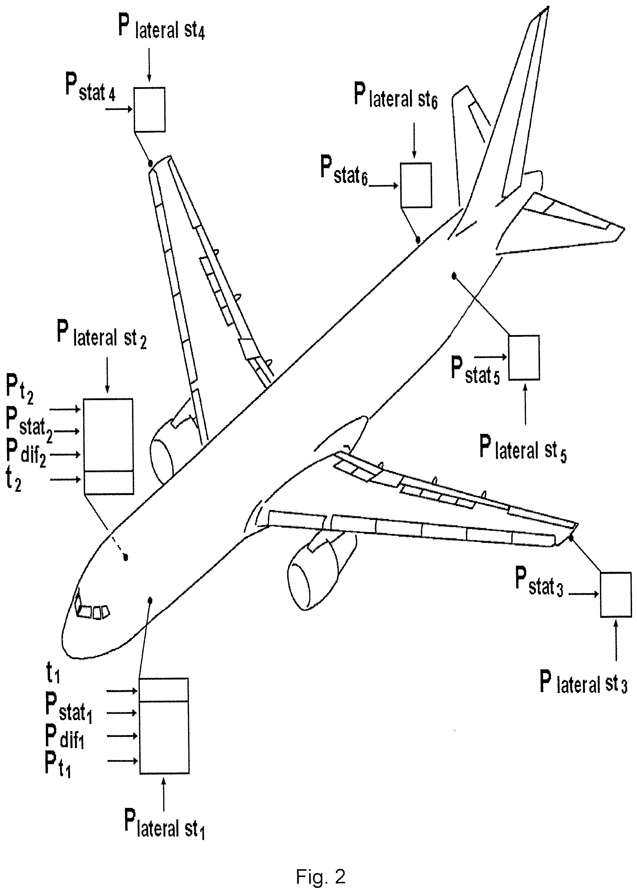

Figure 2    shows a schematic diagram of acquiring air data by the information sources, which reflects the generation by the air data computer of the algorithm for calculating the proposed additional parameters, such as roll, pitch and yaw angles as well as lateral speed in the following form:

1. Roll angle: determined as $\gamma \sim P_{stat4} - P_{stat3}$, where $\gamma < 0$ corresponds to a left roll (left wing down), and $\gamma > 0$ corresponds to a right roll (right wing down). When $P_{stat4} - P_{stat3} = 0$, $\gamma = 0$;

2. Pitch angle: determined as $\vartheta \sim P_{stat5} - P_{stat1}$ or $\vartheta \sim P_{stat6} - P_{stat2}$, where $\vartheta < 0$ corresponds to a dive (nose down), and $\vartheta > 0$ corresponds to a pullup (nose up). When $P_{stat5} - P_{stat1} = 0$ or $P_{stat6} - P_{stat2} = 0$, $\vartheta = 0$;

3. Yaw angle: determined as $\psi \sim (P_{lateral\ stat5} - P_{lateral\ stat1}) = (P_{lateral\ stat2} - P_{lateral\ stat6})$, where $\psi < 0$ corresponds to a left yaw, and $\psi > 0$ corresponds to a right yaw. When $(P_{lateral\ stat5} - P_{lateral\ stat1}) = (P_{lateral\ stat2} - P_{lateral\ stat6}) = 0$, $\psi = 0$;

$$\begin{cases} v_{lateral} \sim (P_{lateral\ stat1} - P_{lateral\ stat2}) = (P_{lateral\ stat5} - P_{lateral\ stat6}) \\ P_{lateral\ stat1} = P_{lateral\ stat3} = P_{lateral\ stat5} \\ P_{lateral\ stat2} = P_{lateral\ stat4} = P_{lateral\ stat6} \end{cases}$$

4. Lateral speed:                                                                                         where $v_{lateral} < 0$ corresponds to a leftward movement, and $v_{lateral} > 0$ corresponds to a rightward movement.

5. In case of concurrent yawing and lateral speed of the aircraft:

$$\begin{cases} \psi \sim (P_{lateral\ stat5} - P_{lateral\ stat1}) = (P_{lateral\ stat2} - P_{lateral\ stat6}) \\ v_{lateral} \sim (P_{lateral\ stat1} - P_{lateral\ stat2}) = (P_{lateral\ stat5} - P_{lateral\ stat6}) \end{cases}$$

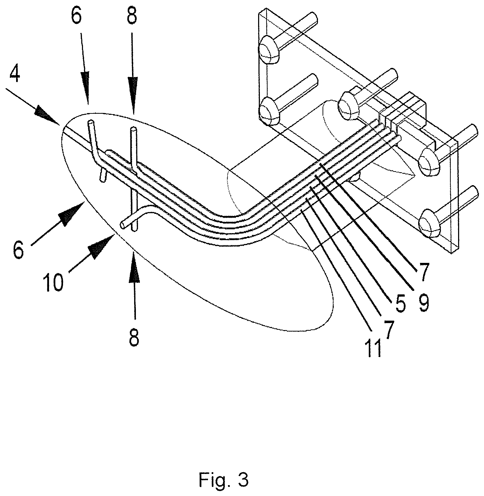

Figures 3-5    show possible arrangement options for the total, static, and differential pressure probes installed at the various points of the aircraft, which provide measurements of the spatial position, yawing and lateral speed.

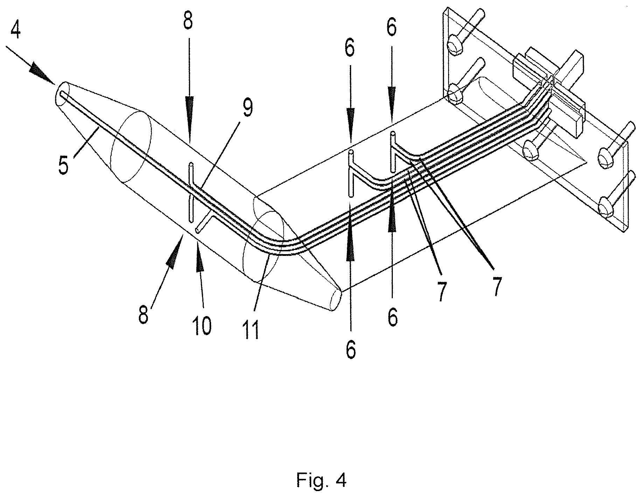

A schematic diagram of the pressure probes installed in the nose section of the fuselage intended for non-maneuvering aircraft (civil aircraft) is shown in Fig. 3, and those intended for maneuvering aircraft (flying at high angles of attack) - in Fig. 4. The pressure probes consist of a total pressure probe (4), its piping (5) and anti-icing system; differential pressure probes (6) characterizing the angle of attack of the aircraft, their piping (7) and anti-icing system; static pressure probes (8), their piping (9) and anti-icing system; and a lateral static pressure probe (10), its piping (11) and anti-icing system. The anti-icing systems are not shown on the diagrams.

When flying at high angles of attack, the openings for measuring the angle of attack (6) should be installed similar to the prototype, i.e., not on an axisymmetric body, but on a strut close to the leading edge thereof [10].

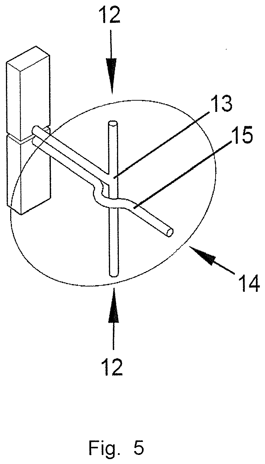

Figure 5    shows a schematic diagram of the static and lateral static pressure probes installed at the wingtips and in the tail section of the aircraft, which consist of static pressure probes (12), their piping (13) and antiicing system, a lateral static pressure probe (14), its piping (15) and anti-icing system. The anti-icing systems are not shown on the diagrams.

The signals associated with the additional parameters and generated by using the aerometric method and device (system) for measuring spatial position, yawing and lateral speed of the aircraft enable expanded technical capabilities of the aerometric method and device (system), and after being calculated by the air data computer in order to increase reliability of the information and improve flight safety, can be supplied to the flight control system and aircraft stall alert and prevention system in the form of the visual and sound alarm signals, as well as to the aircraft automatic flight control system.

REFERENCES

1. V.G. Vorobyev, V.V. Glukhov, I.K. Kadyshev. Aircraft instruments, information and measurement systems and complexes. Moscow. Transport, 1992, pp. 163-168.
2. instrumentation. JAA ATPL. Theoretical knowledge manual. Oxford Aviation, Frankfurt, Germany, 2001, pp. 392-394.
3.Airbus A318/319/320/321. Flight Crew Operating Manual. System Description, pp. 1337-1341.
4.Airbus A340-500/600. Technical Training Manual. Navigation. Airbus S.A.S. 31707 Blagnac Cedex, France, August 2003, pp. 6-13.
5.Boeing 747-400. Aircraft Maintenance Manual. Navigation. The Boeing Company, 2012, pp. 47-55, 211-219.
6.Boeing 767. Maintenance Training Manual. Navigation. The Boeing Company, USA, 2012, pp. 64-72.
7.Boeing 787. Training Student Lab Notebook. Navigation Systems - Avionics Book. The Boeing Company, 2010, pp. 6-38.
8.E.S. Vozhdaev., A.V. Vyalkov, M.A. Golovkin, A.A. Efremov, V.G. Kravtsov, O.I. Nazarov, V.N. Dyatlov, and A.S. Klimov. Flight data measurement system. RF Patent 2290646, Bul. 36, 2005.
9. E.S. Vozhdaev., V.A. Golovkin, M.A. Golovkin, V.I. Guskov, A.A. Efremov, H.G. Keller, A.A. Nikolskiy. Fuselage pitot-static tube with a strut, RF Patent 2157980, 1997.
10. E.S. Vozhdaev, H.G. Kohler, M.A. Golovkin, V.A. Golovkin, A.A. Nikolskiy, A.A. Efremov, V.I. Guskov. fuselage pitot-static tube and the aerodynamic profile of its strut. US Patent 6,588,285, 2003.
11. Embraer E-Jet 170, 190. Maintenance Training Manual. Navigation system,2011, pp. 17-37.
12.www.goodrich.com. Goodrich. Sensors and Integrated Systems. Smart probes.
13. utcaerospacesystems.com. SmartProbe. Air Data Systems.
14. Spatial Disorientation. Visual Illusions. Federal Aviation Administration. www.faa.gov/pilots/safety/pilotsafetybrochures/media/spatiald_visillus.pdf.
15. Safety Advisor. Safe Pilots. Safe Skies. AOPA Air Safety Foundation, 421 Aviation Way. Frederick, Maryland, 2004, p.12. www.asf.org.

**Claims**

1.  An aerometric method for measuring spatial position, yawing and lateral speed of the aircraft based on using the following information from the air data sources: barometric altitude, relative altitude, and vertical speed determined by a variation in static pressure as a function of the flight altitude; indicated speed and Mach numbers determined by a variation in dynamic pressure as a function of flight speed; true air speed determined by a variation in total air temperature, static and total air pressure as a function of the flight altitude and speed; and angle of attack as a function of a variation in differential pressure, *wherein* a roll angle is determined by the difference in static pressures obtained from the static air pressure probes additionally installed at the wingtips; a pitch angle is determined by the difference in static pressures obtained from the static air pressure probes additionally installed on the left and right sides of the nose and tail sections of the fuselage; and a yaw angle and lateral speed of the aircraft are determined based on the lateral static pressures obtained from the lateral static air pressure probes additionally installed on the left and right sides of the nose and tail sections of the fuselage.

2. An aerometric device (system) for measuring spatial position of the aircraft comprising smart air pressure probes (integrated total/static pressure and angle of attack probe), two total air temperature sensors, and a pressure input panel constituting an air data system, *wherein* the air pressure probes, additionally installed on the left and right wingtips and on the left and right sides of the tail section of the fuselage, are further provided with vertically positioned lateral openings for receiving static air pressures, corresponding air manifolds, anti-icing heaters and computers.

3. The aerometric device (system) for measuring yawing and lateral speed of the aircraft according to claim 2, *wherein* the air pressure probes, installed in the nose section and additionally installed in the tail section of the left side of the fuselage, and at the left wingtip, are further provided with horizontally positioned lateral left-sided openings for receiving left-sided static air pressures, corresponding air manifolds, anti-icing heaters and computers; and the air pressure probes, installed in the nose section and additionally installed in the tail section of the right side of the fuselage, and at the right wingtip, are further provided with horizontally positioned lateral right-sided openings for receiving right-sided static air pressures, corresponding air manifolds, anti-icing heaters and computers.

Fig. 1.

$P_{lateral\ st_4}$

$P_{stat_4}$

$P_{lateral\ st_6}$

$P_{stat_6}$

$P_{lateral\ st_2}$

$P_{t_2}$
$P_{stat_2}$
$P_{dif_2}$
$t_2$

$P_{stat_5}$

$P_{lateral\ st_5}$

$P_{stat_3}$

$P_{lateral\ st_3}$

$t_1$
$P_{stat_1}$
$P_{dif_1}$
$P_{t_1}$

$P_{lateral\ st_1}$

Fig. 2

Fig. 3

Fig. 4

Fig. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2290646 A
- WO 2157980 A

- US 6588285 B

### Non-patent literature cited in the description

- **V.G. VOROBYEV ; V.V. GLUKHOV ; I.K. KADYSHEV.** Aircraft instruments, information and measurement systems and complexes. *Transport,* 1992, 163-168
- Theoretical knowledge manual. Oxford Aviation, 2001, 392-394
- System Description. Flight Crew Operating Manual. 1337-1341
- Navigation. Technical Training Manual. Airbus S.A.S, August 2003, 6-13
- Navigation. Aircraft Maintenance Manual. The Boeing Company, 2012, 47-55, 211-219
- Navigation. Maintenance Training Manual. The Boeing Company, 2012, 64-72
- Navigation Systems - Avionics Book. Training Student Lab Notebook. The Boeing Company, 2010, 6-38
- Navigation system. Embraer E-Jet 170, 190. Maintenance Training Manual. 2011, 17-37
- **GOODRICH.** Smart probes. *Sensors and Integrated Systems, www.goodrich.com.*
- Air Data Systems. *SmartProbe, utcaerospacesystems.com.*
- Visual Illusions. Spatial Disorientation. Federal Aviation Administration
- Safety Advisor. Safe Pilots. Safe Skies. AOPA Air Safety Foundation, 2004, 12